# EUROPEAN PATENT APPLICATION

(11) **EP 2 797 332 A1**
(43) Date of publication of application: **29.10.2014**
(21) Application number: 13305528.5
(22) Date of filing: 23.04.2013
(51) Int. Cl.: H04N 21/482, H04N 21/84

(54) **Method and device for querying a knowledge base associated with a multimedia content**

(71) Applicant: Thomson Licensing, 92130 Issy-les-Moulineaux (FR)
(72) Inventor: Chevallier, Louis, 35576 CESSON SEVIGNE CEDEX (FR); Orlac, Izabela, 35576 CESSON SEVIGNE CEDEX (FR); Sirot, Joel, 35576 CESSON SEVIGNE CEDEX (FR)
(74) Representative: Perrot, Sébastien

(57) **Abstract**

The invention relates to a method for querying at least a knowledge base, the at least a knowledge base being associated with at least a multimedia content (10). As to retrieve some information related to first (101) and second (102, 103) objects of the at least a multimedia content, the method comprises the following steps:
- selecting a first objet (101) and at least a second object (102, 103) in the at least a multimedia content (10),
- extracting at least an information related to a relationship between the first object (101) and the at least a second object (102, 103) from the at least a knowledge base by querying the at least a knowledge base according to the selection of the first object and the at least a second object.

## Description

### 1. Scope of the invention

The invention relates to the domain of querying one or more data bases and more specifically to the querying of data base(s) associated with one or more multimedia contents such as video content(s), audio content(s), audio video content(s), web page(s) and the like.

### 2. Prior art

According to the prior art, it is known to associate an object of a video with metadata corresponding for example to textual information on the object or to an hyperlink pointing for example to a web site. By clicking on the object, the user may retrieve the information associated with it via the metadata. Such a video with clickable objects associated with metadata is known as hypervideo (or as hyperlinked video). A hypervideo is then defined as a displayed video stream that contains user-clickable objects allowing navigation between the video and other hypermedia elements.

Today, the most significant consequence of hypervideo results from commercial advertising. Hypervideo indeed offers an alternate way to monetize video, allowing for the possibility of creating video clips where objects link to advertising or e-commerce sites, or provide more information about particular products. This new model of advertising is less intrusive, only displaying advertising information when the user makes the choice by clicking on an object in a video. Since it is the user who has requested the product information, this type of advertising is better targeted and likely to be more effective. The second most significant consequence of hypervideo concerns the content targeted for delivery via the television set. The concept behind the new terms of "Web of Televisions" or "TeleWeb" aims at offering the same browsing and information mining power of the Web, but being more suited to the TV viewing experience. Here may form an environment of not only interactive ads, but also one of interactive and nonlinear news, information, and even story telling.

Existing applications of hypervideo are always focused on a single element of interest, i.e. an object. For example, by clicking on an actor, the user will-get information on this actor's biography and filmography. If this first level of information provides an immediate answer to the user, it does not give to the user the opportunity to deepen his knowledge by involving two or more elements of interest. For example, the current applications are not able to give an answer to a question such" Have these two actors already played together?".

### 3. Summary of the invention

The purpose of the invention is to overcome at least one of these disadvantages of the prior art.

More specifically, the purpose of the invention is notably to retrieve information related to several objects of multimedia content(s).

The invention relates to a method for querying at least a knowledge base, the at least a knowledge base being associated with at least a multimedia content. As to retrieve some information related to first and second objects of the at least a multimedia content, the method comprises the following steps:
- selecting a first objet and at least a second object in the at least a multimedia content,
- extracting at least an information indicative of a relationship between the first object and the at least a second object from the at least a knowledge base by querying the at least a knowledge base according to the selection of the first object and the at least a second object.

According to a particular characteristic, the method comprises parsing a selection sequence comprising the selection of the first object and of the at least a second object.

In an advantageous way, the parsing of the selection sequence comprises an interpreting of the selection sequence as a query for querying the at least a knowledge base.

Advantageously, the querying of the at least a knowledge base is dependent from the selecting order of the first object and the at least a second object.

According to a specific characteristic, the at least a knowledge base comprises metadata associated with the first object and the at least a second object comprised in the at least a multimedia content, the at least an information extracted from the at least a knowledge base being based on said metadata.

According to a particular characteristic, the at least a second object is rendered when selecting the first object.

Advantageously, the at least a second object belongs to a list of objects of the at least a multimedia content remaining selectable after the selecting of the first object.

According to another characteristic, the first object is comprised in a first multimedia content and the at least a second object is comprised in at least a second multimedia content, the at least a second multimedia content being different from the first multimedia content, at least a first knowledge base being associated with the first multimedia content and at least a second knowledge base, different from the at least a first knowledge base, being associated with the at least a second multimedia content.

According to a specific characteristic, the first object and the at least a second object are comprised in a same multimedia content.

In an advantageous way, the first object and the at least a second object have different time locations in the same multimedia content.

According to a particular characteristic, the at least a multimedia content belongs to a group of multimedia contents comprising:
- a video document,
- an audio document,
- an audio/video document,
- an image,
- one or several web pages.

The invention also relates to a device configured for querying at least a knowledge base, the at least a knowledge base being associated with at least a multimedia content, the device comprising at least a processor configured for:
- selecting a first objet and at least a second object in the at least a multimedia content,
- extracting at least an information indicative of a relationship between the first object and the at least a second object from the at least a knowledge base by querying the at least a knowledge base according to the selection of the first object and the at least a second object.

Advantageously, the at least a processor is further configured for parsing a selection sequence comprising the selection of the first object and of the at least a second object.

According to a specific characteristic, the at least a processor is further configured for interpreting the selection sequence as a query for querying the at least a knowledge base.

The invention also relates to a computer program product comprising instructions of program code for executing steps of the method for querying at least a knowledge base, when the program is executed on a computer.

### 4. List of figures

The invention will be better understood, and other specific features and advantages will emerge upon reading the following description, the description making reference to the annexed drawings wherein:
- figures 1 and 2 show a multimedia content comprising a plurality of objects, according to two particular embodiments of the invention;
- figure 3 shows two multimedia contents, each comprising one or more objects, according to a particular embodiment of the invention;
- figure 4 illustrates a method for selecting a first object and at least two second objects of the multimedia content of figure 1, according to a particular embodiment of the invention;
- figures 5 and 6 show each a knowledge base associated with one or more multimedia contents of figures 1 to 4, according to particular embodiments of the invention;
- figure 7 diagrammatically shows a device configured for querying one or more knowledge bases of figures 5 and 6, according to a particular embodiment of the invention;
- figure 8 shows a method for querying one or more knowledge bases of figures 5 and 6, implemented by the device of figure 7, according to a particular embodiment of the invention.

### 5. Detailed description of embodiments of the invention

The invention will be described in reference to a particular embodiment of a method for querying one or several knowledge base(s) which are associated with one or several multimedia content such as video content(s), audio content(s), and/or web page(s) for example. To that aim, a user selects a first object and one or several second objects in the multimedia content(s), for example by taping on the objects if the objects are rendered on one or several touch screens and/or by using a remote controller and/or vocal commands. Based on the selection of the first object and the second objects, the knowledge base(s) is (are) queried as to extract any information related to the relationship(s) between the first object and the second object(s). By combining two or more objects (which corresponds for example to elements of interest selected by a user), the user expresses a request in a quasi natural way and without any interaction's effort (just tap and tap again for example). The grammar associated with the request applies operations that are common in languages, such as union or intersection. By understanding a user's precise request, without any effort, the method described with more detail in the rest of the description gives to the user precise and reliable information, allowing him to deepen its knowledge.

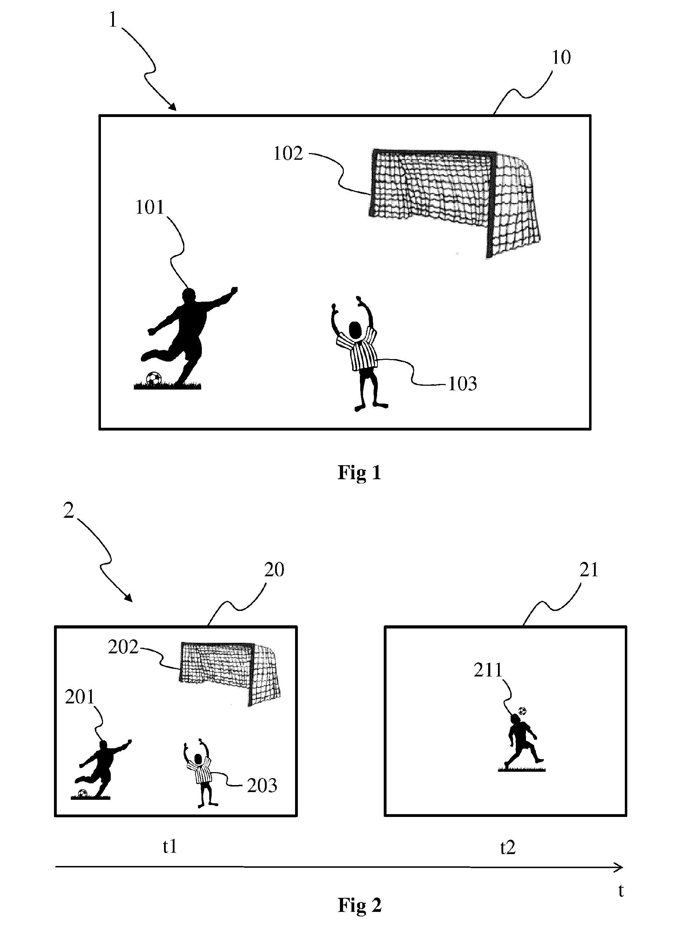

**Figure 1** illustrates a first example of a multimedia content 1, according to a particular and non limitative embodiment of the invention. The multimedia content 1 comprises for example one still image 10 or an image 10 (i.e. a frame) of a movie or clip comprising a sequence of images, the content of which varying at least in part over time. The multimedia content is advantageously rendered / displayed on a display device, such as for example a PDP ("Plasma Display Panel"), a LCD ("Liquid Crystal Display") screen or an OLED ("Organic Light-Emitting Diode") screen. According to the non limitative example of figure 1, the multimedia content comprises three graphical objects 101, 102 and 103, the object 101 corresponding to a soccer player shooting a ball, the object 102 corresponding to a goal and the object 103 corresponding to a referee, the multimedia content being representative of a soccer match scene according to this example. Each object 101 to 103 of the multimedia content 10 may be selected by a user watching at it. In case of an image, it implies that the image has been spatially segmented as to identify all or parts of the graphical objects of the image 10, either manually or automatically through any spatial segmentation method well known to the skilled person in the art, for example, through the use of intensity gradients to detect edges, color histograms to match regions, motion detection, or a combination of these and other methods.

Let's consider, as an example, that a user watching at the image 10 wants to know how many goals the soccer player 101 has ever scored or has scored during the soccer match represented in the video comprising the image 10. To that aim, the user selects a first object, for example the object 101, and a second object, for example the object 102. The first object 101 and the second object 102 may be selected one after the other or concurrently according to this example. If selected one after the other, the first object 101 may be selected before the second object 102 or the first object 101 may be selected after the second object 102. According to this example, the order in the selection sequence of the first and second objects doesn't matter and enables to obtain the same information. According to a variant and as it will be described with more details with regard to figure 2, the order in the selection sequence of the first and second objects does matter, which means that the information retrieved after the selection of the first and second objects is different depending on whether the first object is selected before or after the second object.

The selection of the first and second objects 101 and 102 is advantageously performed by tapping on the screen onto which the image 10 is displayed, assuming that the screen is a touch screen. According to a variant, the first and second objects 101 and 102 are selected by using any pointing device associated with the screen displaying the image 10, for example a mouse, an optical pointer associated with the screen. According to another variant, the first and second objects are selected via gesture control, for example by pointing at the first and second objects with a part of the body of the user. According to this variant, the pointing gesture is detected by a camera equipped with depth sensor (for example a 3D depth camera) by out using machine learning techniques already widely used for numerous applications of detection and classification in computer vision, for example, the detection of faces in pictures or videos, as described for example in the article entitled "Arm-Pointer: 3D Pointing Interface for Real-World Interaction", written by Eiichi Hosoya et al. and published on May 13, 2004 or in the patent application EP2410401 published on January 25, 2012. According to another variant, the first and second objects 101 and 102 are selected by using vocal command, the words and/or sounds coming from the user being detected by one or more microphones. According to this variant, the user selects an object by saying words or sentences for e.g. locating the object to be selected (for example by pronouncing an expression such as "left-hand side bottom" which enables to locate the object 101 on the image 10, this command prompting the highlighting of the object 101, another command such as "select" triggering and validating the selection if it really corresponds to the object the user wishes to select) or for identifying the object by saying an appropriate word, such as "soccer player" for the object 101, "goal" for the object 102 or "referee" for the object 103.

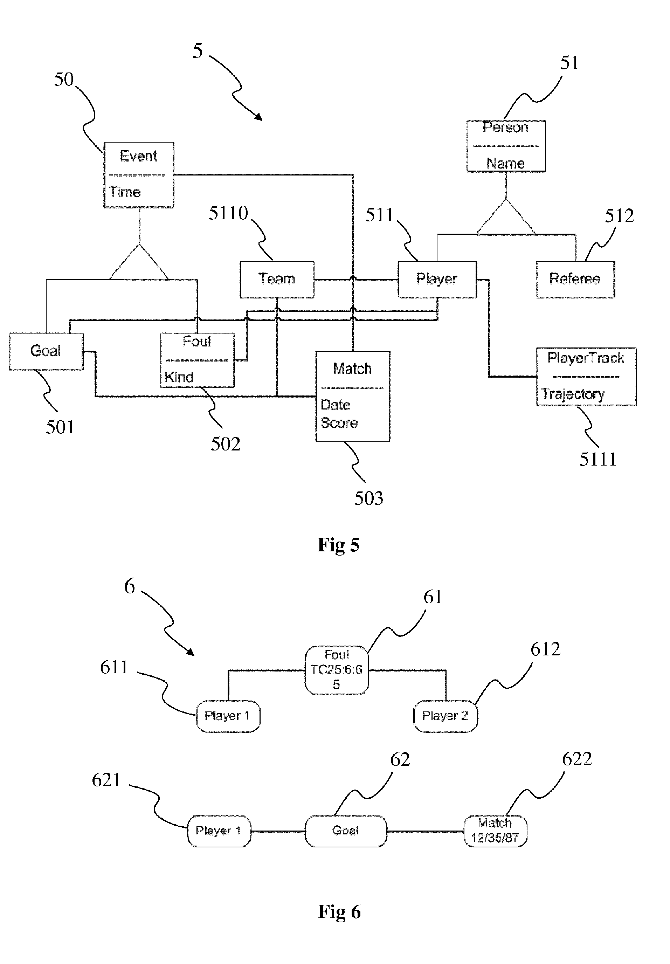

Based on the selection of the first object 101 and of the second object 102, one or more knowledge bases associated with the multimedia content 10 is (are) queried as to extract an information related to the relationship between the first object 101 and the second object 102. **Figures 5 and 6** illustrate such knowledge bases associated with the multimedia content 10, according to two specific and non limitative embodiments of the invention.

**Figure 5** advantageously illustrates a diagram 5 corresponding for example to a concept map showing the relationships between different concepts associated with the multimedia content 10, a concept corresponding for example to an object, to an event, to an action, to a place, etc. The diagram 5 takes for example the form of a UML (Unified Modelling Language) diagram or of an ORM (Object-Role Modelling) diagram, comprises metadata associated to each concept of the multimedia content 10. The diagram 5 associated with the knowledge base comprises metadata 51 associated with the objects of the image 10 of the person type. The objects on which are based the query are advantageously grouped into classes, a class characterizing the information describing the objects, i.e. the instances of the class. This information is also called attributes of the class and an attribute may be a numerical or textual data or a link to another object (instance) for example. The classes may be organized in a tree structure as to express relationships between the classes. A class (child class) that is dependent from one or several another class(es) (parent class(es)) possesses all the attributes of its parent class(es). With regard to figure 5, the metadata 51 corresponds to the class "Person". The class "Person" has a child class which is the class "Player" 511 (this class "Player" having as instances (objects) the players of the multimedia content, for example 11 players for a team). The class "Player" has an attribute which corresponds to the "Team" 5110 to which it belongs.

The metadata 51 comprises for example the name of the person and much other information like the date of birth, the age, etc. Additional metadata 511, 512 are associated with the metadata 51 associated with the person, for example for identifying the role of the person, metadata 511 identifying the person 51 as a player, metadata 512 identifying the person 51 as a referee, other metadata (non represented on figure 5) identifying the person 51 as a goal keeper, and so on. Further metadata 5110 and 5111 may be associated with the additional metadata 511, for example metadata 5110 adds some information to the player 511 about the team to which he belongs or the teams in which he has ever played; and metadata 5111 comprises enabling to track the player 511 within a sequence of images comprising the image 10. Metadata of the diagram 5 also comprises the metadata 50 describing the events that have occurred during the match represented on the image 10 and on other images of a video comprising a sequence of images including the image 10 or that have occurred in other matches. The metadata 50 also comprises an information representative of the occurrence time of the invent, this information corresponding for example at the time expressed in hour, minute and second (time 0 corresponding to the beginning of the match) or at the time expressed with a day and the time or at the number of the frame associated with an image of the images sequence comprising the image 10. Additional metadata 501, 502, 503 are associated with the event type metadata 50, for example metadata identifying the type of event, such as metadata 501 which identifies goals type events and as metadata 502 which identifies fouls type events, the metadata further comprising further information on the kind of foul. Metadata 503 identifies the event of the match type and comprises information such as the date and the score. Metadata are linked (e.g., related) with each other, for example the player 511 is connected to the metadata "foul" 502 and "goal" 501 as to store that the player has done one or several fouls and/or scored one or several goals. Of course, the diagram 5 corresponds to a specific illustration of what a knowledge base associated with the image 10 may comprise and the number and type of metadata associated with the objects of the image 10 is not limited to the metadata of figure 5.

**Figure 6** advantageously illustrates a diagram 6 corresponding to an instance scheme instantiating some classes of the figure 5, specifically the classes "Foul" 61 and "Goal" 62, according to a specific and non limitative embodiment of the invention. As illustrated by Figure 6, the player 1 611 and the player 2 612 are involved in a foul that occurred at a given timecode (25:6:65). With regard to the class "Goal" 62, the diagram 6 illustrates that the player 1 621 score a goal during the match 622. "12/35/87" corresponds for example to the attribute 'date' for every object (or instance) of the class "Match" 622.

The result of the query of the knowledge bases associated with the multimedia content 1 generating by selecting the first object 101 and the second object 102 is obtained, according to this first example, by inspecting how the first and second objects are related to each other in the diagram 5. The system or device performing the query may find all possible connections and the generated answer/result consists of the attributes of the metadata elements 501 and 503 for example. Information indicative of the link between the representation of an object of the multimedia content 10 and this object in the knowledge base(s) is associated with the multimedia content 10. An example for a query is:
**Select** Player1.*fouls* **where** time<35:54 and *actors* **contains** Player2
where the selected first object is'Player1', the selected second object is 'Player2', the result of such a query being the fouls implying 'Player1' and 'Player2' before the time 35:54. 'Player1' and 'Player2' correspond to the instances and 'time' and 'actors' are attributes of the class 'Foul'.

In an advantageous way, the result of the query is displayed on the screen used for rendering the multimedia content 1, for example by incrusting or overlaying a textual message on the content of the image 10 (like subtitles) or by displaying a frame comprising the textual information. The result is advantageously displayed in an area of the multimedia content not comprising any selectable object. According to a variant, the result of the query is displayed on a screen different from the main screen on which is displayed the multimedia content, for example on a companion screen such as a tablet or a Smartphone for example. To that aim, the companion screen and the main screen are connected to each other (for example by using either a wired or a wireless connection like Wi-Fi or Bluetooth), either directly or indirectly (for example via a gateway or a set-top-box decoding the multimedia content to be rendered on the main screen). According to another variant, the result of the query is audio information rendered via loudspeaker(s) associated with the screen used for displaying the multimedia content 1.

**Figure 2** illustrates a second example of a multimedia content 2, according to a particular and non limitative embodiment of the invention. The multimedia content 2 comprises a sequence of images, for example a first image 20 and a second image 21. The content of the first image 20 represents for example a first scene of a soccer match shot at a time t1 and the content of the second image 21 represents for example a second scene of the soccer match shot at a time t2, t2 being temporally subsequent to t1. The first image 20 comprises three graphical objects 201, 202 and 203, the object 201 corresponding to a soccer player shooting a ball, the object 202 corresponding to a goal and the object 203 corresponding to a referee. The second image 21 comprises one graphical object 211 which corresponds to a soccer player with a ball. The soccer player 211 is for example different from the soccer player 201. One or several knowledge bases are associated with the multimedia content 2, as described with regard to figure 1. If a spectator watching at the soccer match rendered by displaying the sequence of images comprising the first and second images 20, 21 wants to know information related to the relationship between the player 201 and the player 211, the users has to select the player 201 as a first object and the player 211 as a second object (in any way, as described with regard to figure 1). The order of selection of the first and second object has advantageously an impact on the result of the query associated with the selection sequence. For example, if the user first selects the player 201 and then the player 211, the result of the query may provide any fouls committed by the player 201 on the player 211. Inversely, if the user first selects the player 211 and then the player 201 (for example by going back to the first image 20 after having watched at the second image 21), the result of the query may provide any fouls committed by the player 211 on the player 201.

According to a variant, the first object 201 is highlighted when selected by the user, e.g. a frame surrounding the first object 201 is displayed, or the color information associated with the pixels of the first object are set to a predetermined color (for example red, yellow or blue). In an advantageous way, if the first object 201 is also comprised in the second image 21 in addition to the second object 211, the first object 201 is displayed highlighted as to help the spectator to identify the first object he has selected. According to variant, the second object 211 is also highlighted when selected, for example with a color different from the color of the first object. According to another variant, the second object is not highlighted when selected.

According to a variant, the selection of a first object excludes one or more other objects of the multimedia content from being selected. For example, the selection of the referee 203 as a first object excludes the goal 202 from the list of objects that may be selected as to generate the query.

The result of the query generated via the selection of the first and second objects is displayed as described with regard to figure 1.

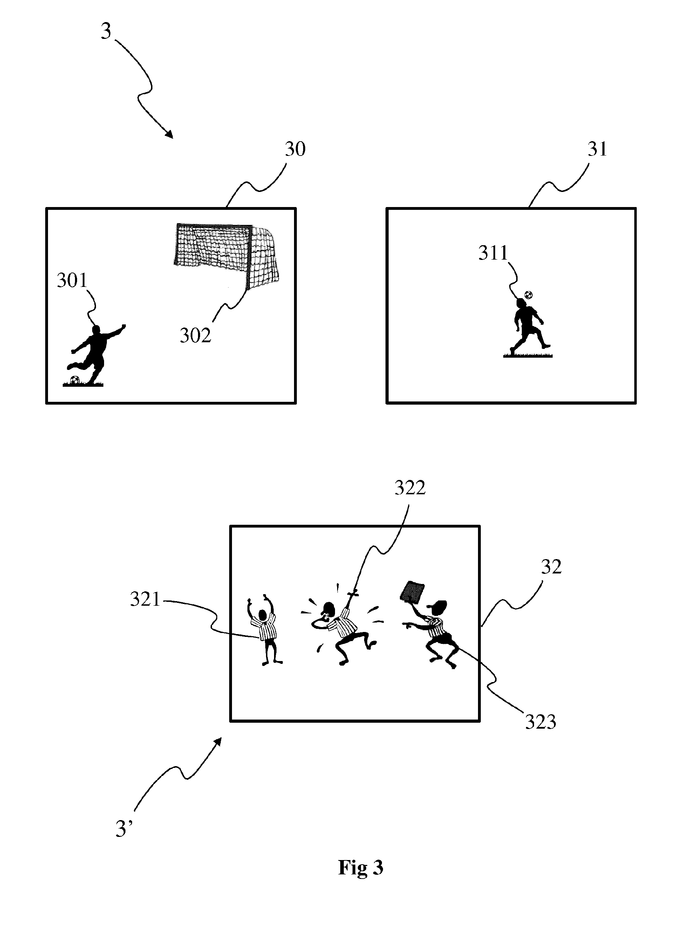

**Figure 3** illustrates a third example of multimedia contents, comprising two multimedia contents 3 and 3', according to a particular and non limitative embodiment of the invention. The first multimedia content 3 comprises a first image 30 and a second image 31 and the second multimedia content 3' comprises an image 32. The first image 30 comprises two graphical objects, i.e. a player 301 and a goal 302. The second image 31 comprises a player 311, for example different from the player 301. The image 32 of the second multimedia content 3' comprises three graphical objects 321, 322 and 323, each corresponding to a different referee. The first multimedia content 3 corresponds for example to a video corresponding to a soccer match displayed for example on a television screen. The second multimedia content 3' corresponds for example to a web page displayed on a tablet or on the screen of a laptop or of a personal computer PC. According to a variant, the image 32 corresponding to the content of the web page comprises a list of referee's names instead of graphical objects, each name being selectable and associated with metadata. According to a variant, the image 32 comprises both graphical object(s) and textual object(s). Metadata are associated with each object of the first and second multimedia content 3 and 3', a first knowledge database being for example associated with the first multimedia content 3 and a second knowledge database being associated with the second multimedia content 3', the first and the second knowledge databases being linked to each other. A spectator of the match displayed on the television screen who wants to know if the player 301 has ever played in a match refereed by one (or several) of the referees 321 to 321 then selects the player 301 of the first multimedia content 3 and the referee 321, 322 or 323 of the second multimedia content. According to another example, the spectator selects the player 301 as a first object, the player 311 as a second object and the referee 322 as a third object. The result of the query corresponding to this selection sequence of objects comprises any matches (with for example the date, the number of fouls per match, etc. according to the content of the metadata comprised in the knowledge bases associated with the multimedia contents 3 and 3') in common for the both players 301 and 311 and the referee 322. Naturally, the number of objects selected for building the query is not limited to two or three objects but extends to any number of objects, for example 4, 5, 10 or more. The number of multimedia contents used for selecting objects is also not limited to one or two but also extends to any number of multimedia contents, for example 3, 4, 5 or more.

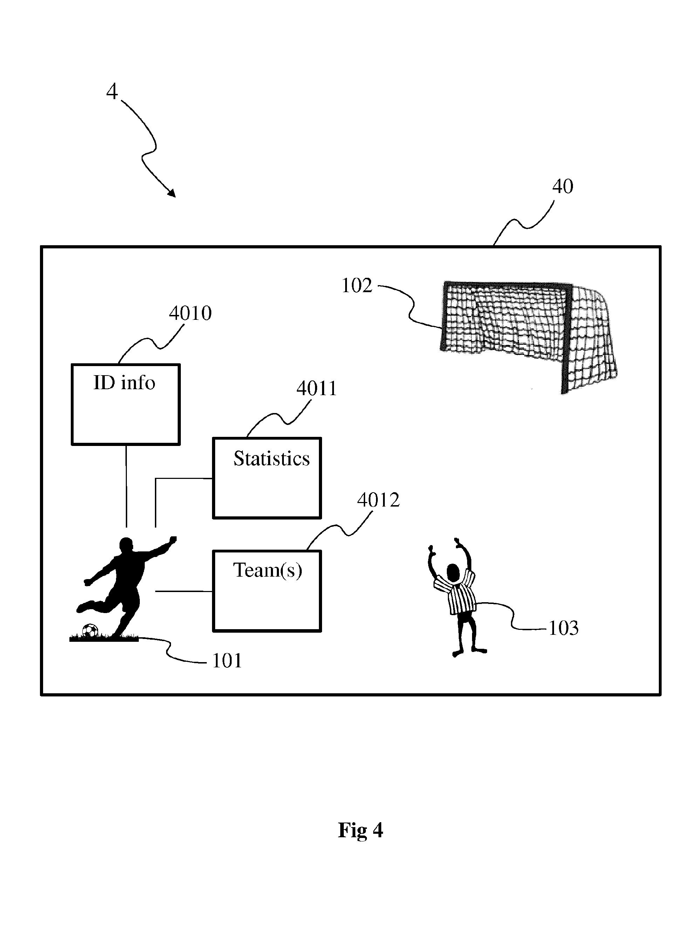

**Figure 4** illustrates a fourth example of a multimedia content 4, according to a particular and non limitative embodiment of the invention. The multimedia content 4 corresponds for example to a still image 40 displayed on a display device, to a web page 40 or to an image 40 of a video. The image 40 comprises three graphical objects 101, 102 and 103 which are the same objects of the image 10 than in figure 1. A user selects the object 101. When selecting the first object 101, three additional objects 4010, 4011 and 4012 are rendered, i.e. displayed if these additional objects correspond to graphical object and/or textual objects. The first additional object 4010 comprises for example a text box "ID info" (for identification information) linked to the player 101; the second additional object 4011 comprises for example a text box "Statistics" linked to the player 101; and the third additional object 4012 comprises for example a text box "team(s)" linked to the player 101. According to the information about the player 101 the user is interested in, the user then selects one or several of the additional objects 4010 to 4012 for building the selection sequence for generating a query. If the user wants only to retrieve general information about the ID (of the player (like for example the name, the date of birth, the age, where the player lives, etc.), the user then selects the first additional object 4010. If the user wants to know in which teams the player 101 as ever played and every statistics associated with the player 101, the user then selects the additional objects 4011 and 4012 as second objects of the selection sequence. Advantageously, if the user selects the "Statistics" box 4011 before the "Team(s)" box 4012, the content of the query's result is organized according to the selection order, i.e. the "statistics" are rendered before the "team(s)". According to a variant, the selection order of the additional objects has no impact on the organization of the query's result.

According to a variant, the additional object corresponds to audio objects which are rendered via loudspeaker(s) associated with the display device displaying the image 40. As to select one or more of the additional audio objects, the user may advantageously say key words identifying the additional audio objects, for example the words "ID info" for selecting the object 4010, "statistics" for the object 4011 and "team" for the object 4012.

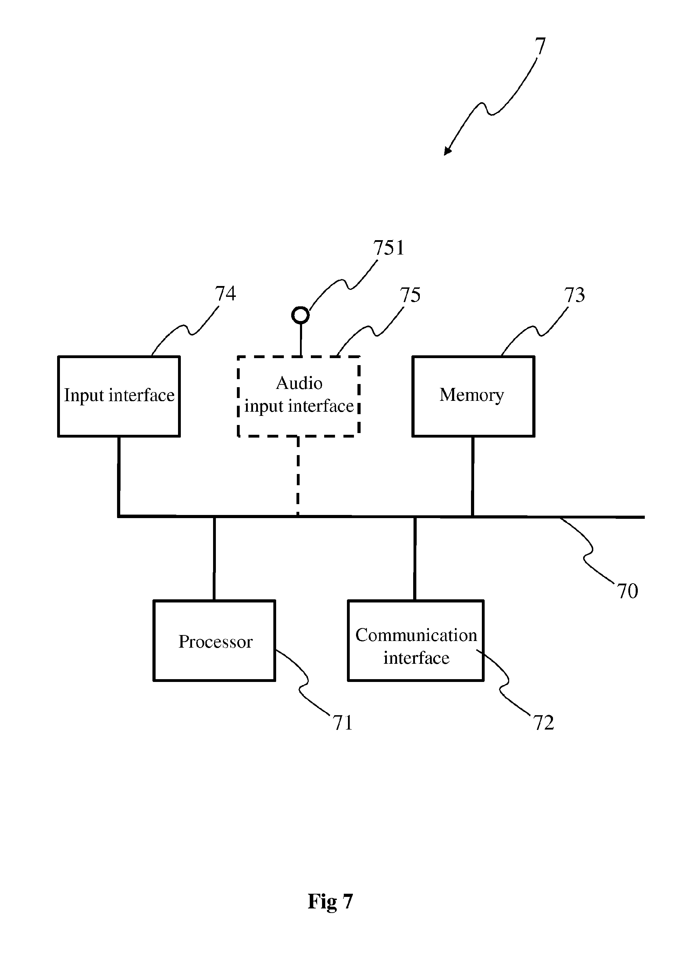

**Figure 7** diagrammatically shows a hardware embodiment of a device 7 querying knowledge database(s) associated with multimedia content(s). The device 7 is also configured for the creation of display signals of one or several synthesis images representative of the virtual environment. The device 4 corresponds for example to a processing module of a tablet, a Smartphone, a set-top box, a personal computer (PC) or a laptop.

The device 7 comprises the following elements, connected to each other by a bus 70 of addresses and data that also transports a clock signal:
- one or several microprocessor 71 (CPU and/or GPUs),
- a communication interface 72 for communicating for example with a gateway or a set-top box configured for decoding the multimedia content to be rendered,
- a memory 73, for example a Random Access Memory or RAM comprising registers,
- an input interface 74 receiving the instructions for selecting the first and second objects,
- an audio input interface 75 connected to a microphone 751 for processing vocal commands when vocal commands are used for selecting the first and second objects, the microphone being connected to the audio input interface 75 via a wireless connection (for example Wi-Fi according to IEEE 802.11-2012 or Bluetooth according to IEEE 802.15.4-2010) or via a wired connection.

It is noted that the word "register" used in the description of the memory 73 designates both a memory zone of low capacity (some binary data) as well as a memory zone of large capacity (enabling a whole program to be stored or all or part of the data representative of data calculated or to be displayed).

When switched-on, the microprocessor 71 loads and executes the instructions of the program contained in the memory 73.

The memory 73 notably comprises:
- the operating program of the microprocessor 71 responsible for switching on the device 7,
- parameters representative of the selection of the first and second objects,
- parameters representative of the link(s) between the selected first and second objects and their associated metadata,
- information representative of the result of the query to be rendered.

The algorithms implementing the steps of the method specific to the invention and described hereafter are stored in the memory 73. When switched on, the processor 71 executes the instructions of these algorithms in the form of programs using for example Java, C++, Python, etc....

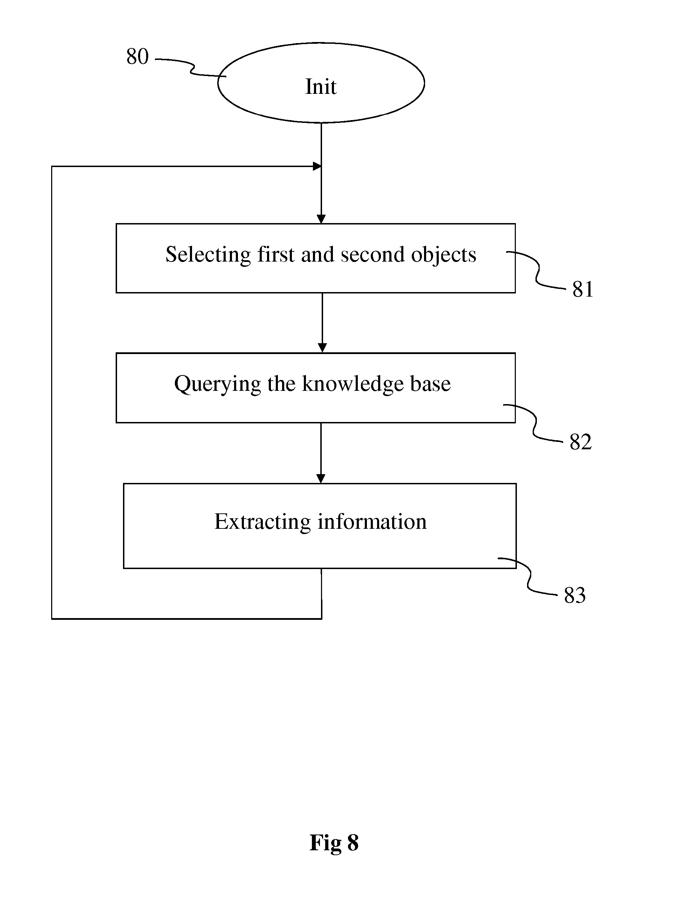

**Figure 8** shows a method for querying one or more knowledge bases associated with one or more multimedia content, the method being implemented into the module 7, according to a first non-restrictive particularly advantageous embodiment of the invention.

During an initialisation step 80, the different parameters of the module 7 are updated. In particular, the parameters representative of the selection of the first and second objects are initialised in any way.

Then during a step 81, a first object and one or more second objects of one or several multimedia contents are selected as to form an object selection sequence. The selection is performed in any way, for example with a tap on each object if the multimedia content(s) is (are) rendered on touch screen(s), or by using a remote controller or any pointing device. The first and the second objects belong advantageously to a same multimedia content, the first and second object being rendered at a same time or at different times (i.e. the first and the second objects have different time locations in the multimedia content), the second object being rendered for example after the first object. According to a variant, the first object belongs to a first multimedia content and the second object belongs to a second multimedia content different from the first multimedia content. According to another variant, the second object(s) is (are) rendered (i.e. displayed and/or emitted in case of a sound) when the first object is selected. According to a further variant, the second object(s) belongs to a list of objects of the multimedia content(s) which remain selectable after the selection of the first object. According to this variant, the second object(s) that are selectable after the selection of the first object depend from the first object, which means that object(s) of the multimedia content(s) which are by default selectable is (are) not selectable any more once the first object has been selected. A multimedia content corresponds for example to:
- a video document comprising a sequence of images, the first and/or second objects corresponding for example to graphical objects and/or textual objects, or
- an audio document, the first and/or second objects corresponding for example to audio objects (e.g. a word, a group of words, any sound), or
- an audio-video document, the first and second objects corresponding for example to a graphical object, a textual object, an audio object, the first and the second object being, according to a variant, of different types (for example a graphical object and an audio object, or a graphical object and a textual object, or a textual object and an audio object), or
- an image, the first and/or second objects corresponding for example to graphical objects and/or textual objects, or
- a web page, the first and/or second objects corresponding for example to graphical objects and/or textual objects.

The first and second objects are selected in one single multimedia content, or in several multimedia contents of the same type (i.e. video document or audio document or audio-video document or image or web page) or in several multimedia contents of different types (for example the first object belongs to a video document and the second object(s) belong to a web page or the first object belongs to an audio document, a second object belongs to an image and a third object belongs to a web page, etc.).

One or several knowledge bases are associated with the multimedia content(s) used for selecting the first and second objects. The knowledge base comprises metadata associated with the multimedia content and the knowledge base is associated with hyperlinks pointing to the metadata being associated with the objects of the multimedia content.

According to a variant of implementation, a temporization starts when selecting the first object, the selection process starting advantageously with the selection of the first object. The duration of the temporization, typically a few seconds (for example 2, 5, 10 or 30 seconds), is predetermined or set by a user. The one or more second objects have then to be selected before the end of the temporization. If the user does not select any second object before the end of the temporization, the first object is then removed from the selection and the user has to restart the selection sequence if he wishes to.

According to another variant of implementation, the user performing the selection of the first and second objects triggers the selection process by entering an appropriate command (for example a specific sign drawn on a touch screen, or a specific button of a remote controller or pointing device, a specific word or group of words such as for example "selection start").

Then during a step 82, the knowledge base(s) associated with the multimedia content(s) comprise the selected first and second objects that is (are) queried, the objects selection sequence being translated (interpreted) in a query language that is understood by the database(s) comprising the knowledge base(s), for example in Java. In an advantageous way, the order (i.e. the temporal order) of selection of the first object and of the second object(s) has an impact on the query, i.e. the result of the query is different depending from the selection of the first object before or after the second object. According to a variant, the order of selection of the first object and of the second object(s) does not have any impact on the query and on the result of the query, i.e. the result is the same whatever the order of selection of the first and second objects.

According to a variant, the objects selection sequence is parsed, for example as to check the validity of the query associated with the objects selection sequence. To that aim, the objects selection sequence is interpreted in the query language. If the query appears to be valid, i.e. compliant with the syntax of the language of the query or in line with the structure of the queried knowledge base, then the query is performed. In this case, the parsing comprises the identifying of the selected first and second objects. Then, the parsing comprises the searching for the links connecting (directly, i.e. a direct link exists between the first and the second objects or indirectly, i.e. the first and second objects are linked (e.g., related) to each other via other objects/classes) the first and second objects in the knowledge base(s). Then, a graph comprising all the links between the first and second objects is obtained, this graph being advantageously a connected graph (i.e. all the objects of the graph are connected with each other, at least indirectly) and a path between the first object and the second object is selected, for example the shortest path between the objects is selected. If the query appears to be invalid, then the query is not performed and an error message is rendered for informing the user that he has to do the selection of the first and second objects again, i.e. the process goes back to step 80.

Then during a step 83, information is extracted from the knowledge base(s) according to the query associated with the selection of the first and second objects. The information that is retrieved is advantageously representative of the relationship between the first object and the second object(s) selected, i.e. it corresponds to any information common to the first and second objects and/or any information linking the first and second objects in the knowledge base(s). The relationship information that is extracted from the knowledge base(s) is advantageously retrieved from the metadata comprised in the knowledge base(s) and associated with the first and second objects, the relationship between the first and second objects being represented by the connections linking the metadata in the knowledge base(s).

The result of the extraction is advantageously rendered to the user by using the device used for rendering the multimedia content(s). If the multimedia content corresponds to a video document or to an audio-video document displayed on a screen, the result of the extraction may be displayed on this screen or on any screen connected to the device performing the query and retrieving the result. If the multimedia content corresponds to an audio document, the result of the extraction may be rendered by using vocal synthesis for example or by displaying textual information on a screen connected to the device rendering the audio document (e.g. connected with wired connection or with wireless connection).

Naturally, the invention is not limited to the embodiments previously described.

In particular, the invention is not limited to a method for querying at least one knowledge base but extends to any algorithm comprising instructions for executing the steps of the method and also extends to any device implementing this method and/or the algorithm and notably any devices comprising at least one processor.

The invention also relates to a method for generating a request in any query language by selecting objects of multimedia content(s) and/or to a method for rendering the result of the query on any rendering device.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, tablets, Smartphones, games consoles, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. Method for querying at least a knowledge base (5), the at least a knowledge base (5) being associated with at least a multimedia content (1, 4), **characterized in that** said method comprises the following steps:
- selecting (81) a first objet (101) and at least a second object (102, 103; 4010, 4011, 4012) in the at least a multimedia content (1, 4),
- extracting (83) at least an information indicative of a relationship between the first object (101) and the at least a second object (102, 103; 4010, 4011, 4012) from the at least a knowledge base (5) by querying (82) the at least a knowledge base (5) according to the selection of the first object (101) and the at least a second object (102, 103; 4010, 4011, 4012).

2. Method according to claim 1, wherein the method comprises parsing a selection sequence comprising the selection of the first object (101) and of the at least a second object (102, 103; 4010, 4011, 4012).

3. Method according to claim 2, wherein the parsing of the selection sequence comprises an interpreting of the selection sequence as a query for querying the at least a knowledge base (5).

4. Method according to any one of the claims 1 to 3, wherein the querying of the at least a knowledge base is dependent from the selecting order of the first object (101) and the at least a second object (102, 103; 4010, 4011, 4012).

5. Method according to any one of the claims 1 to 4, wherein the at least a knowledge base (5) comprises metadata associated with the first object (101) and the at least a second object (102, 103) comprised in the at least a multimedia content (1, 4), the at least an information extracted from the at least a knowledge base (5) being based on said metadata.

6. Method according to any one of the claims 1 to 5, wherein the at least a second object (4010, 4011, 4012) is rendered when selecting the first object.

7. Method according to any one of the claims 1 to 5, wherein the at least a second object belongs to a list of objects of the at least a multimedia content (1, 4) remaining selectable after the selecting of the first object.

8. Method according to any one of the claims 1 to 5, wherein the first object is comprised in a first multimedia content and the at least a second object is comprised in at least a second multimedia content, the at least a second multimedia content being different from the first multimedia content, at least a first knowledge base being associated with the first multimedia content and at least a second knowledge base, different from the at least a first knowledge base, being associated with the at least a second multimedia content.

9. Method according to any one of the claims 1 to 5, wherein the first object and the at least a second object are comprised in a same multimedia content.

10. Method according to claim 9, wherein the first object and the at least a second object have different time locations in said same multimedia content.

11. Method according to any one of the claims 1 to 10, wherein the at least a multimedia content belongs to a group of multimedia contents comprising:
- a video document,
- an audio document,
- an audio/video document,
- an image,
- one or several web pages.

12. Device (7) configured for querying at least a knowledge base, the at least a knowledge base being associated with at least a multimedia content, **characterized in that** said device comprises at least a processor (71) configured for:
- selecting a first objet and at least a second object in the at least a multimedia content,
- extracting at least an information indicative of a relationship between the first object and the at least a second object from the at least a knowledge base by querying the at least a knowledge base according to the selection of the first object and the at least a second object.

13. Device according to claim 12, wherein the at least a processor (71) is further configured for parsing a selection sequence comprising the selection of the first object and of the at least a second object.

14. Device according to claim 13, wherein the at least a processor (71) is further configured for interpreting the selection sequence as a query for querying the at least a knowledge base

15. Computer program product, **characterized in that** it comprises instructions of program code for executing steps of the method according to one of claims 1 to 11, when said program is executed on a computer.
